# DEMANDE DE BREVET EUROPEEN

(11) **EP 1 098 038 A1**
(43) Date de publication de la demande: **09.05.2001**
(21) Numéro de dépôt: 00470019.1
(22) Date de dépôt: 17.10.2000
(51) Int. Cl.: E01H 1/04, E01H 6/00, A01D 42/00, A01D 43/077, A01G 1/12, E01H 1/05

(54) **Véhicle automoteur multifonction pour l'entretien des espaces verts**

(30) Priorité: 02.11.1999 FR 9913952
(71) Demandeur: Mathieu Yno, 54113 Toul (FR)
(72) Inventeur: George, Yvan, 54202 Toul (FR)
(74) Mandataire: Poupon, Michel

(57) **Abrégé**

L'invention concerne un véhicule automoteur (1) multifonction pour l'entretien d'espaces verts, du type comportant un châssis porteur (2), mobile sur quatre roues entraînées par un moteur principal, avec un siège conducteur, un poste de conduite (6) et une benne de réception de déchets (7) placée à l'arrière du véhicule, caractérisé en ce qu'il comporte d'une part un ensemble de brossage (4) pour le ramassage de déchets, porté par le châssis et prévu ente les roues avant et les roues arrière du véhicule, et d'autre part un porte-outil (35) à l'avant du châssis (2) pour placer un outil de travail devant les roues avant du véhicule.

De façon préférentielle le porte-outil (35), déconnectable par un moyen de connection-déconnection, porte un outil (3) démontable choisi dans l'ensemble (outil de coupe, outil de débroussaillage, lame de déneigement, brosse de voirie, épandeur de sel, balai à neige).

Application : Entretien d'espaces verts

## Description

La présente invention concerne un véhicule automoteur multifonction pour l'entretien des espaces verts.

On connaît déjà de véhicules de ce type comme par exemple des véhicules pour tondre et ramasser la coupe de gazon, destinés à l'entretien d'espaces verts de grandes surfaces, terrains de sport, terrain de golf par exemple.

Les véhicules tondeurs ramasseurs actuels présentent plusieurs inconvénients qui limitent leur intérêt :
- le poids du véhicule augmenté de celui de son dispositif de ramassage engendre des traces de roues ou autres dégâts sur le terrain
   - la hauteur du dispositif de ramassage derrière le conducteur gène la visibilité en cas de recul et ne permet pas le passage sous des arbustes ou autres obstacles,
   - l'adjonction d'un dispositif de ramassage nécessite une mécanique supplémentaire qui génère une augmentation du bruit de la machine en fonction du travail,
   - la distance entre le bac de ramassage et l'outil de coupe est toujours très importante d'ou colmatage très fréquent dans le conduit qui relie ces deux outils,
   - par construction, et pour tenir compte de la visibilité et du poids on est limité en volume de ramassage, les machines actuelles proposent un bac de ramassage de 600 l maximum

On connaît également des véhicules automoteurs de petite taille pour tondre le gazon, mais on ne peut pour des raisons d'encombrement lui associer la fonction de ramassage par brosses.

Le gazon est dans ce cas ramassé par un conduit d'aspiration et projeté dans un bac. Les inconvénients de ce type de matériel sont la faible capacité de stockage et la rapidité de l'engorgement du conduit et de la turbine surtout si le gazon est haut et/ou mouillé.

La présente invention vise à pallier l'ensemble des inconvénients ci-dessus.

La demanderesse s'est fixé pour objectif de réaliser un véhicule multifonction combinant la fonction du ramassage par brossage, sur une surface engazonnée, de tonte de gazon et/ou autres déchets végétaux avec une autre fonction par exemple mais non limitativement celle de la coupe de gazon.

De plus la hauteur du véhicule, benne comprise ne devra pas dépasser la hauteur des yeux du conducteur afin de ne pas gêner la visibilité et son centre de gravité devra être abaissé de manière à ce que le véhicule puisse aborder des pentes importantes, par exemple 30° sans risque de basculement.

Un autre objectif a consisté à limiter la hauteur du bac de ramassage (par exemple 1.50 m) pour conserver une visibilité arrière totale.

Pour atteindre ces objectifs il a fallu aller à l'encontre des habitudes du métier et rapprocher l'une de l'autre la fonction outil et la fonction ramassage, supprimer le conduit de jonction en plaçant le moyen de ramassage entre roues avant et roues arrières et l'outil devant les roues avant, tout en plaçant le moteur du véhicule à côté du conducteur. Il a fallu également prévoir un ensemble de brossage déplaçable verticalement par rapport au châssis du véhicule.

En outre le fait de rapprocher les fonctions et de ne pas mettre le moteur à l'arrière a entraîné la conception d'un châssis isostérique, squelettique, qui a permis d'alléger le véhicule tout en gagnant en capacité de ramassage.

Tous ces objectifs sont atteints par l'invention qui consiste en un véhicule automoteur multifonction pour l'entretien d'espaces verts, du type comportant un châssis porteur, mobile sur quatre roues entraînées par un moteur principal, avec un siège conducteur, un poste de conduite et une benne de réception de déchets placée à l'arrière du véhicule, caractérisé en ce qu'il comporte d'une part un ensemble de brossage pour le ramassage sur une surface engazonnée, de tonte de gazon et/ou autres déchets végétaux, ledit ensemble étant porté par le châssis, déplaçable verticalement par rapport au châssis, réglable en hauteur, et qui est prévu entre les roues avant et les roues arrière du véhicule. En outre, un porte-outil est prévu à l'avant du châssis pour placer un outil de travail devant les roues avant du véhicule.

De façon préférentielle le porte-outil est déconnectable par un moyen de connection-déconnection.

De façon préférentielle l'outil est démontable et choisi dans l'ensemble (outil de coupe, outil de débroussaillage, lame de déneigement, brosse de voirie, épandeur de sel, balai à neige).

De façon préférentielle l'outil et le porte-outil sont équipés d'un système de compensation de poids.

De façon préférentielle on prévoit en avant du porte-outil, une roulette d'appui.

De façon préférentielle la roulette d'appui est réglable en hauteur.

De façon préférentielle l'ensemble de brossage est composé d'au moins deux brosses cylindriques disposées parallèlement, l'une au-dessus de l'autre, tangentes entre elles, enfermées dans un caisson élévateur comportant en bas une bouche d'entrée et en haut une bouche de sortie.

De façon préférentielle le caisson comporte en outre en partie basse devant la brosse, sur toute sa largeur, une bavette pivotante et indexable.

De façon préférentielle le caisson comporte en outre un volet plat, sur toute la largeur du caisson incliné vers l'arrière du véhicule et indexable.

De façon préférentielle le caisson est déplaçable verticalement dans deux glissières sous l'action d'un vérin.

De façon préférentielle on prévoit des interfaces de montage, de chaque côté du caisson comportant un moyen de compensation des erreurs d'alignement et un moyen pour supporter les efforts latéraux sur le caisson.

De façon préférentielle le moyen de compensation des erreurs d'alignement est un roulement porté par une extrémité de l'arbre d'interface et dont la surface de roulement est sphérique et s'appuie intérieurement sur les deux ailes d'une glissière en U.

De façon préférentielle le moyen pour supporter les efforts latéraux est un roulement porté par une extrémité de l'arbre d'interface et disposé parallèlement au fond de la glissière en U, sur lequel il s'appuie, ledit axe du roulement tournant dans un logement prévu en bout d'axe, autour d'un axe secondaire fixé dans l'axe .

De façon préférentielle le caisson est équipé d'un dispositif de sécurité anti-écrasement.

De façon préférentielle le dispositif de sécurité est une roulette à hauteur indexable.

De façon préférentielle le caisson est équipé d'un dispositif de compensation de poids.

De façon préférentielle le dispositif de compensation comporte un capteur qui transmet au vérin une information de pression prélevée sur le moteur d'entraînement des brosses.

De façon préférentielle le moteur du véhicule est placé à côté du siège du conducteur.

Bien entendu, les réalisations préférentielles énumérées ci-dessus peuvent être employées seules ou en combinaison.

On comprendra mieux l'invention à l'aide de la description qui suit d'un mode de réalisation non limitatif de l'invention, faite en référence aux figures annexées suivantes :
- Figure 1 : vue générale d'un véhicule selon l'invention, donnée à titre d'exemple de réalisation non limitatif
- Figure 2 : vue en coupe verticale, en direction longitudinale du véhicule de la figure 1.
- Figure 3 : vue de dessus simplifiée du véhicule de la figure 1 avec couvercle de benne arrière enlevé.
- Figure 4 : section verticale simplifiée du véhicule réalisée au niveau du moteur.
- Figure 5 : section verticale d'un ensemble de brossage (4) utilisé sur le véhicule de figure 1
- Figure 6 : détail de l'interface de liaison entre l'ensemble de brossage et une glissière verticale de guidage.
- Figure 7 : vue générale de l'ensemble de brossage de la figure 5 montrant l'entraînement des brosses et le système de compensation de poids selon l'invention.

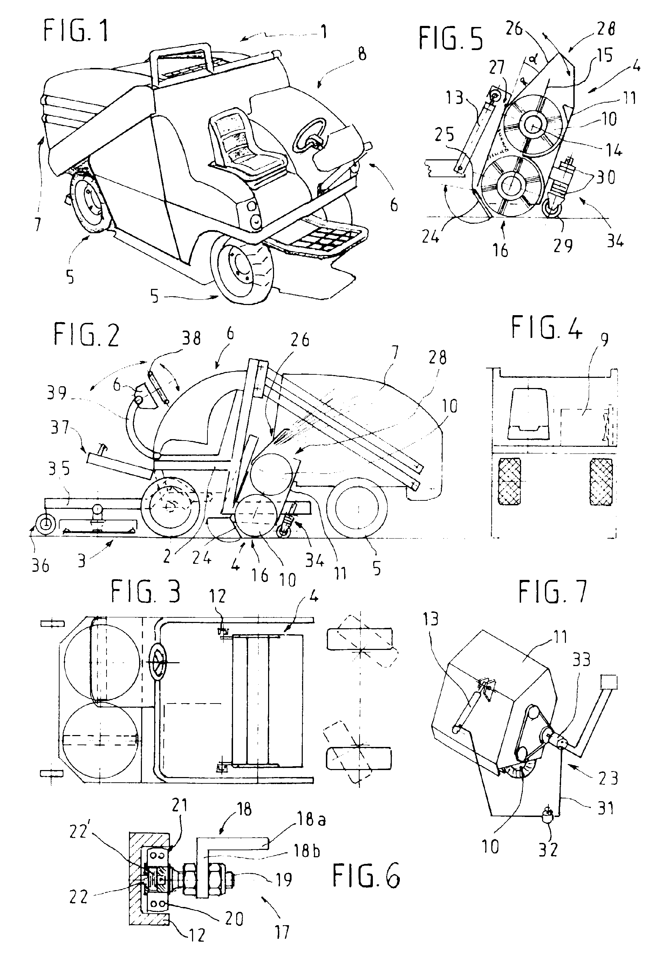

Un véhicule automoteur selon l'invention comporte un châssis tubulaire (2) portant un outil avant (3), un ensemble de brossage (4) pour le ramassage, un moteur thermique (9) entraînant les roues (5) dont deux roues directrices et motrices à l'arrière du véhicule, un poste de conduite (6) une benne collectrice de déchets (7) et un capotage (8) (figure 1).

Conformément à l'invention, l'outil (3) est placé en avant des roues avant du véhicule et l'ensemble de brossage (4) entre les roues avant et les roues arrières (figure 2). L'outil (3) est, sur la figure 1 à 3 un outil de coupe de gazon mais il pourra être remplacé par un autre outil par exemple un outil de débroussaillage, une lame de déneigement une brosse de voirie, un épandeur de sel, un balai à neige.

Pour diminuer la hauteur arrière du véhicule, le constructeur a choisi de placer le moteur (9) latéralement et au-dessus des roues avant, à côté du siège du conducteur (figure 4).

Le ramassage des déchets est réalisé par l'ensemble de brossage (4) composé de au moins deux brosses cylindriques disposées parallèlement l'une au-dessus de l'autre et tangentes entre elles et enfermées dans un caisson élévateur (11) selon une technique connue du brevet FR 2 535 756.

Les brosses (10) sont portées par le caisson (11) et montées à rotation autour de leur axe longitudinal (14).

Le caisson (11) et son axe de transport (15) sont inclinés vers l'arrière (figure 5) de façon à ce que les déchets ramassés en bas du caisson (11) au niveau de la bouche d'entrée (16), par la première brosse, soient relevés par la 2^{ème} brosse vers une bouche de sortie de caisson (28) puis projetés dans la benne (7) (voir figure 2).

L'ensemble de brossage (4) est spécifiquement destiné au ramassage de tonte de gazon et/ou déchets végétaux sur des surfaces engazonnées qu'il faut éviter de détériorer. Pour ce faire, il faut tenir compte, entre autres, de l'état du sol (sec, détrempé ou autre...), de la qualité de l'herbe (jeune gazon, prairie ou autre...), c'est pourquoi l'ensemble de brossage (4) est, selon une caractéristique essentielle de l'invention, déplaçable et réglable en hauteur par rapport au châssis.

En outre, cet ensemble de brossage comporte plusieurs caractéristiques non obligatoires mais qui améliorent le rendement du ramassage et la résistance des pièces.

Sur l'exemple de réalisation non limitatif des figures, l'ensemble de brossage est déplaçable verticalement dans deux glissières (12) à profil en U, (voir figure 3) sous l'action d'un vérin (13) (voir figure 5) commandé depuis le poste de conduite et permettant soit d'adapter le niveau de brossage de la brosse inférieure au niveau de la surface à brosser (terme technique « position flotte »), soit d'augmenter la pression de brossage en descendant davantage l'ensemble, soit de débrayer la fonction balayage en effaçant l'ensemble de brossage, soit de fixer la hauteur de ramassage.

Selon une caractéristique de l'invention, on prévoit des interfaces de montage (17), deux de chaque côté, entre le caisson (11) et les glissières en U, dans les buts d'une part, de compenser les erreurs d'alignement et d'obtenir un coefficient de frottement faible sur le profil en U, et d'autre part pour supporter les efforts latéraux que subit le caisson.

Une interface de montage (17) est composée (figure 6) par exemple mais non limitativement des moyens suivants :
- une équerre (18) en L dont une branche (18a) est fixée à la paroi avant du caisson,
- un arbre d'interface (19) est positionné horizontalement et perpendiculairement à l'axe longitudinal de la glissière grâce à l'autre branche (18 b) de l'équerre sur laquelle il est fixé.
- un premier roulement (20) à double rangée de billes, dont la surface (21) de roulement est sphérique et s'appuie intérieurement sur les deux ailes de la glissières en U (12). Cet aménagement permet de compenser les erreurs d'alignement. Ce roulement sphérique (20) est porté par l'extrémité de l'axe (19) et il permet le coulissement le long de la glissière (12). L'axe du roulement est perpendiculaire au fond de la glissière.
- un deuxième roulement (22 porté également par l'extrémité de l'axe d'interface (19) tournée vers la glissière, ayant pour fonction de supporter les efforts latéraux subis par le caisson. Son axe est disposé parallèlement au fond de la glissière et s'appuie sur celui-ci, il tourne dans un logement prévu en bout d'axe (19), autour d'un axe secondaire (22') fixé dans l'axe (19),

Pour commander le déplacement du caisson dans les glissières, on utilise un vérin hydraulique (13) fixé d'une part sur le châssis du caisson, d'autre part sur le châssis du véhicule (voir figure 5).

Le vérin (13) remplit encore une autre fonction, celle de compenser le poids du caisson (11) pour que ledit caisson puisse suivre les variations de terrain (« position Flotte »).

Le dispositif de compensation (23), visible en figure 7 se compose par exemple mais non limitativement des moyens suivants.

Une liaison hydraulique (31) et un limiteur de pression (32) qui transmettent au vérin (13) l'information de pression prélevée sur le moteur (33) d'entraînement des brosses, proportionnellement au couple engendré par les brosses devant l'obstacle. Ledit vérin réagit et soulève ou abaisse le caisson (11) en fonction des variations de hauteur du sol qui ont provoqué la variation de pression sur l'ensemble de brossage (4).

Ce dispositif de compensation (23) peut être activé ou désactivé depuis le poste de conduite (6).

Selon une autre caractéristique de l'invention, le caisson est équipé d'un dispositif de sécurité (34) anti-écrasement (figure 5) pour éviter les fausses manoeuvres de l'utilisateur quand il agit sur le vérin. Il s'agit par exemple d'une roulette (29) fixée à hauteur réglable sur l'arrière du caisson. Un jeu de cales (30) assure d'une part une hauteur de ramassage prédéterminée entre le sol et la brosse inférieure et permet d'autre part de compenser l'usure des brosses. Dans le cas où le dispositif de compensation (23) des brosses est désactivé, le caisson repose sur le dispositif de sécurité (34).

Le caisson (11) comporte également en partie basse, devant la brosse inférieure et sur toute sa longueur, une bavette (24) (figure 5), par exemple en caoutchouc, rendue pivotante par exemple par une charnière (25) à inclinaison indéxable. Ladite bavette, lorsqu'elle est appliquée contre la brosse, fait office de butée et permet à la brosse d'attraper la tonte et les déchets. En écartant la bavette de la brosse, selon plusieurs positions prédéterminées, on s'adapte à la quantité de tonte ou de déchets à ramasser.

La bouche de sortie du caisson (28) est modulable également grâce à un volet (26) pivotant autour d'une charnière (27). Ce volet s'étend sur toute la largeur du caisson, il est incliné vers l'arrière du véhicule pour diriger les déchets, amenés par la brosse supérieure, vers la benne. En modifiant l'inclinaison a du volet on optimise au maximum le remplissage de la benne.

Lorsque les déchets sont légers, on abaisse d'avantage le volet (α augmente) pour les obliger à s'entasser dans le fond de la benne, et inversement lorsque les déchets sont lourds (gazon mouillé, feuilles...).

Selon une autre caractéristique de l'invention, l'outil avant (3) est démontable et remplaçable par un autre outil. Sur les figures l'outil avant (3) est un outil de coupe de gazon à couteaux rotatifs, il pourrait être remplacé par un des outils déjà énumérés précédemment.

L'outil (3) et porté par un porte outil (35) comportant des moyens de connection-déconnection sur le châssis (2) (figure 2).

On peut prévoir également sur ce porte outil (35) un dispositif de compensation de poids, par exemple celui utilisé pour l'ensemble de brossage avec un moyen de prélever l'information sur le moteur d'entraînement de l'outil.

On prévoit, en avant du porte-outil, une roulette d'appui (36) pouvant éventuellement être indexable en hauteur de la même façon que la roulette (29).

Afin de diminuer l'encombrement en position garage et/ou de faciliter la mise en place ou le remplacement de l'outil, ou bien du porte-outil, on prévoit un repose pied (37) relevable (figure 2).

Par ailleurs, le poste de conduite (6), portant un volant (38) (figure 2) est réglable en hauteur par pivotement de la colonne de direction (39), celle-ci étant formée d'une tubulure enfermant le faisceau technique.

Parmi les avantages de l'invention on notera que :
- le véhicule est notablement allégé, limitant les traces des roues ou autres dégâts sur le terrain
- le véhicule est plus silencieux
- les colmatages sont supprimés
- la visibilité est bonne tout en proposant un volume de ramassage important.

## Revendications

1. Véhicule automoteur (1) multifonction pour l'entretien d'espaces verts, du type comportant un châssis porteur (2), mobile sur quatre roues entraînées par un moteur principal (9), avec un siège conducteur, un poste de conduite (6) et une benne de réception de déchets (7) placée à l'arrière du véhicule, caractérisé en ce qu'il comporte d'une part un ensemble de brossage (4) pour le ramassage de la tonte de gazon et/ou d'autres déchets végétaux, porté par le châssis, prévu ente les roues avant et les roues arrières du véhicule, déplaçable verticalement et réglable en hauteur par rapport audit châssis.

2. Véhicule selon la revendication 1 caractérisé en ce qu'il comporte un porte-outils (35) à l'avant du châssis (2) pour placer un outil de travail devant les roues avant du véhicule ; le porte-outil (35) étant connectable ou déconnectable par un moyen de connexion-déconnexion.

3. Véhicule selon l'une des revendications 1 à 2 caractérisé en ce que l'outil de travail (3) est démontable et choisi dans l'ensemble (outil de coupe, outil de débroussaillage, lame de déneigement, brosse de voirie, épandeur de sel, balai à neige).

4. Véhicule selon l'une des revendications 1 à 3 caractérisé en ce que l'outil (3) et le porte-outil (35) sont équipés d'un système de compensation de poids.

5. Véhicule selon l'une des revendications 1 à 4 caractérisé en ce qu'on prévoit en avant du porte-outil, une roulette d'appui (36).

6. Véhicule selon la revendication précédente caractérisée en ce que la roulette d'appui (36) est réglable en hauteur.

7. Véhicule selon l'une des revendications 1 à 6 caractérisé en ce que l'ensemble de brossage (4) est composé d'au moins deux brosses cylindriques disposées parallèlement, l'une au dessus de l'autre, tangentes entre elles, enfermées dans un caisson élévateur (11) comportant en bas une bouche d'entrée (16) et en haut une bouche de sortie (28).

8. Véhicule selon la revendication (7) caractérisé en ce que le caisson comporte en outre en partie basse devant la brosse, sur toute sa largeur, une bavette (24) pivotante et indexable.

9. Véhicule selon l'une des revendications 7 à 8 caractérisé en ce que le caisson comporte en outre un volet plat (26), sur toute la largeur du caisson incliné vers l'arrière du véhicule et indexable.

10. Véhicule selon l'une des revendications 7 à 9 caractérisé en ce que le caisson (11) est déplaçable verticalement dans deux glissières (12) sous l'action d'un vérin (13).

11. Véhicule selon la revendication 10 caractérisé en ce qu'on prévoit des interfaces de montage (17), de chaque côté du caisson (11) comportant un moyen de compensation des erreurs d'alignement et un moyen pour supporter les efforts latéraux sur le caisson.

12. Véhicule selon la revendication 11 caractérisé en ce que le moyen de compensation des erreurs d'alignement est un roulement (20) porté par une extrémité de l'arbre d'interface (19) et dont la surface de roulement (21) est sphérique et s'appuie intérieurement sur les deux ailes d'une glissière en U.

13. Véhicule selon l'une des revendications 1 à 12 caractérisé en ce que le moyen pour supporter les efforts latéraux est un roulement (22) porté par une extrémité de l'arbre d'interface (19) et disposé parallèlement au fond de la glissière en U, sur lequel il s'appuie, ledit axe du roulement tournant dans un logement prévu en bout d'axe (19), autour d'un axe secondaire (22') fixé dans l'axe (19).

14. Véhicule selon l'une des revendications 10 à 13 caractérisé en ce que le caisson est équipé d'un dispositif de sécurité (34) anti-écrasement.

15. Véhicule selon la revendication précédente caractérisée en ce que le dispositif de sécurité (34) est une roulette (29) à hauteur indexable.

16. Véhicule selon l'une des revendications 10 à 15 caractérisé en ce que le caisson est équipé d'un dispositif de compensation de poids (23).

17. Véhicule selon la revendication précédente caractérisée en ce que le dispositif de compensation comporte un capteur (32) qui transmet au vérin (13) une information de pression prélevée sur le moteur (33) d'entraînement des brosses.

18. Véhicule selon l'une des revendications 1 à 17 caractérisé en ce que le moteur (9) du véhicule est placé à côté du siège du conducteur.
